# EUROPÄISCHE PATENTSCHRIFT

(11) **EP 2 357 053 B1**
(45) Veröffentlichungstag und Bekanntmachung des Hinweises auf die Patenterteilung: **05.12.2018**
(21) Anmeldenummer: 11000849.7
(22) Anmeldetag: 03.02.2011
(51) Int. Cl.: B23D 63/16

(54) **Feilenführung**
File guide
Guidage de lime

(30) Priorität: 17.02.2010 DE 102010008245
(43) Veröffentlichungstag der Anmeldung: 17.08.2011
(73) Patentinhaber: Andreas Stihl AG & Co. KG, 71336 Waiblingen (DE)
(72) Erfinder: Föhrenbach, Jan, 70378 Stuttgart (DE); Huentz, Christine, 70192 Stuttgart (DE)
(74) Vertreter: Reinhardt, Annette

(56) Entgegenhaltungen:
- DE-C1- 19 909 423
- US-A- 3 670 600
- US-A- 5 241 882

## Beschreibung

Die Erfindung betrifft eine Feilenführung der im Oberbegriff des Anspruchs 1 angegebenen Gattung.

Aus der US 5,241,882 ist eine Feilenführung bekannt, die mit Nuten auf die Sägekette aufgesetzt wird. Dabei sind zwei Nuten zum Feilen rechter Schneidzähne und zwei Nuten zum Feilen linker Schneidzähne vorgesehen. Die Nuten für die rechten und linken Schneidzähne sind benachbart zueinander angeordnet. Beim Wechseln von rechtem auf linken Schneidzahn wird der Feilenhalter seitlich gedreht.

Aus der US 3,670,600 ist eine Feilenführung bekannt, die mit einer Nut auf die Sägekette aufgesetzt wird. Die Feilenführung besitzt Aussparungen in unterschiedlichen Winkeln zur Nut, so dass das Feilen von rechten und linken Schneidzähnen ermöglicht wird. Beim Wechseln vom rechten auf den linken Schneidzahn wird die Feile aus der einen Aussparung ausgeführt und in die andere Aussparung eingeführt.

Aus der DE 199 09 423 C1 ist eine Schneidlehre zum Vornehmen von Gehrungsschnitten an Leisten bekannt. Die zu schneidenden Leisten werden in eine Nut eingeführt, die in der Schneidlehre eingelassen ist. Mit an der Schneidlehre angebrachten Schnittführungen lassen sich die Leisten in definierten Winkeln abschneiden.

Der Erfindung liegt die Aufgabe zugrunde, eine Feilenführung der gattungsgemäßen Art zu schaffen, bei der die Handhabung verbessert ist.

Diese Aufgabe wird durch eine Feilenführung mit den Merkmalen des Anspruchs 1 gelöst. Dadurch, dass eine Nut zu einer ersten Seite der Feilenführung hin offen ist und eine zweite Nut zu einer zweiten, gegenüberliegenden Seite der Feilenführung, wird die Feilenführung beim Wechsel von rechtem auf linken Schneidzahn über Kopf gedreht. Dazu kann die Feilenführung eine Rollbewegung in Längsrichtung der Sägekette durchführen. Dadurch ergibt sich eine einfache Handhabung. Ist der Feilenhalter einmal richtig auf die Sägekette aufgesetzt, so wird aufgrund der Abrollbewegung die korrekte Ausrichtung der Feilenführung auch für die folgenden Schneidzähne beibehalten.

Die Nuttiefe der beiden auf einer Seite der Feilenführung angeordneten Nuten ist unterschiedlich. Die in Laufrichtung der Sägekette hinten anzuordnende Nut ist dabei tiefer als die in Laufrichtung vorne anzuordnende Nut. Dadurch ergibt sich eine schräge Anordnung der Feilenführung auf der Sägekette. Die Längsachse der Aufnahme für die Feile ist in auf die Sägekette aufgesetztem Zustand der Feilenführung in Seitenansicht auf die Sägekette gesehen vorteilhaft gegenüber der Längsrichtung der Sägekette um einen Anstellwinkel von etwa 5° bis etwa 15° geneigt. Dadurch wird die Feile in einer vorteilhaften Richtung geführt. Die Neigung der Feile entspricht zweckmäßig dem Neigungswinkel des zu feilenden Zahndachs.

Auf der ersten Seite und auf der zweiten Seite der Feilenführung sind jeweils zwei Nuten vorgesehen. Dadurch ist die Orientierung der Feile gegenüber der Längsrichtung der Sägekette und damit auch zum Schneidzahn konstruktiv vorgegeben. Vorteilhaft ist jeweils eine Nut auf die beiden dem zu feilenden Schneidglied vorlaufenden Verbindungsglieder und eine Nut auf die beiden dem zu feilenden Schneidglied nachlaufenden Verbindungsglieder der Sägekette aufsetzbar. Jede Nut übergreift zwei nebeneinander liegende Verbindungsglieder der Sägekette. Dadurch wird eine gute Positionierung der Feilenführung erreicht. Der Abstand der beiden auf einer Seite der Feilenführung angeordneten Nuten entspricht dabei insbesondere der vierfachen Teilung der Sägekette.

Die Breite der Nuten entspricht vorteilhaft etwa der Breite der Sägekette im Bereich zwischen den Nieten der Verbindungsglieder. Dadurch wird ein fester Sitz der Feilenführung auf der Sägekette erreicht. Dadurch, dass die Feilenführung zwischen den Nieten an den Verbindungsgliedern der Sägekette aufgesetzt wird, ist auch die Positionierung in Längsrichtung der Sägekette vergleichsweise genau. Insbesondere entspricht die Breite der Nuten etwa der Breite einer Führungsschiene, in der die Sägekette geführt ist.

Die Schneidzähne der rechten Schneidglieder und die Schneidzähne der linken Schneidglieder sind üblicherweise in Längsrichtung der Sägekette gesehen seitlich zueinander versetzt. Es ist vorgesehen, dass die auf den gegenüberliegenden Seiten der Feilenführung angeordneten Nuten um den Betrag des Versatzes der Schneidglieder zueinander versetzt sind. Dadurch wird erreicht, dass die Schneidglieder bezogen auf die Aufnahme für die Feilenführung die gleiche Position haben. Vorteilhaft besitzt die Feilenführung mindestens einen Anschlag, der beim falschen Aufsetzen der Feilenführung an einem Schneidzahn anschlägt und ein vollständiges Aufsetzen der Feilenführung auf die Sägekette verhindert. Dadurch ist ein Feilen eines Schneidzahns in einer falschen Richtung konstruktiv auf einfache Weise verhindert.

Eine einfache Gestaltung ergibt sich, wenn die Aufnahme für die Feile an zwei auf gegenüberliegenden Seiten der Sägekette anzuordnenden Haltern ausgebildet ist. Die Halter sind dabei vorteilhaft an mindestens einem Führungsbolzen etwa in Längsrichtung der Sägekette beweglich geführt. Dadurch können die Halter bei durch den Schärfvorgang abnehmender Zahnlänge nachgeführt werden. Die Richtung, in der die Halter beweglich geführt sind, entspricht dabei vorteilhaft der Längsrichtung der Feilenführung, die gegenüber der Längsrichtung der Sägekette geringfügig geneigt ist.

Um gute Führungseigenschaften für die Feile zu erreichen, ist vorgesehen, dass jeder Halter mindestens eine Führungsrolle besitzt, an der die Feile geführt ist. Beim Feilen kann es durch Druck auf die Feile dazu kommen, dass die Feile von einer der Führungsrollen abhebt. Um diese Kippbewegung der Feile zu vermeiden ist vorgesehen, dass jeder Halter zwei Führungsrollen besitzt, zwischen denen die Feile geführt ist. Die beim Feilen von rechten Schneidzähnen oben liegenden, der Stabilisierung dienenden Führungsrollen sind beim Feilen von linken Schneidzähnen die Führungsrollen, auf denen die Feile aufliegt. Es kann jedoch auch vorgesehen sein, dass jeweils nur eine Führungsrolle vorgesehen ist, die in dem Halter beweglich angeordnet ist, so dass sie je nach Drehlage der Feilenführung in die untere Position im Halter rutscht.

Die Führungsrollen sind vorteilhaft um eine Drehachse drehbar gelagert, die in Draufsicht auf die Sägekette gegenüber der Längsrichtung der Sägekette geneigt ist. Der Neigungswinkel beträgt dabei vorteilhaft etwa 15° bis etwa 45°. Ein einfacher Aufbau der Feilenführung ergibt sich, wenn beide Halter identisch ausgebildet und um 180° gedreht zueinander an der Feilenführung angeordnet sind. Die Feilenführung besitzt vorteilhaft zwei Seitenwände, zwischen denen die Halter angeordnet sind und die die Nuten zum Aufsetzen der Feilenführung auf die Sägekette aufweisen. Auch die beiden Seitenwände sind vorteilhaft identisch ausgebildet.

Ein Ausführungsbeispiel der Erfindung wird im Folgenden anhand der Zeichnung erläutert. Es zeigen:
- Fig. 1: eine perspektivische Darstellung der Feilenführung,
- Fig. 2: eine Draufsicht auf die Feilenführung aus Fig. 1,
- Fig. 3: einen Schnitt entlang der Linie III-III in Fig. 2,
- Fig. 4: den Feilenhalter in auf die Sägekette aufgesetztem Zustand beim Feilen eines linken Schneidzahns in Seitenansicht,
- Fig. 5: eine Draufsicht auf die Anordnung aus Fig. 4 in Richtung des Pfeils V in Fig. 4,
- Fig. 6: die auf die Sägekette aufgesetzte Feilenführung beim Feilen eines rechten Schneidzahns in Seitenansicht,
- Fig. 7: eine Draufsicht auf die Anordnung aus Fig. 6 in Richtung des Pfeils VII in Fig. 6,
- Fig. 8 bis Fig. 11: die Feilenführung beim Verschwenken aus der Position zum Feilen des linken Schneidzahns in die Position zum Feilen des rechten Schneidzahns in Seitenansicht,
- Fig. 12: eine Seitenansicht in Richtung des Pfeils XII in Fig. 8,
- Fig. 13: eine Draufsicht in Richtung des Pfeils XIII in Fig. 12,
- Fig. 14: eine Draufsicht auf die Anordnung aus Feilenführung und Sägekette bei falsch aufgesetzter Feilenführung,
- Fig. 15: eine Seitenansicht in Richtung des Pfeils XV in Fig. 11.

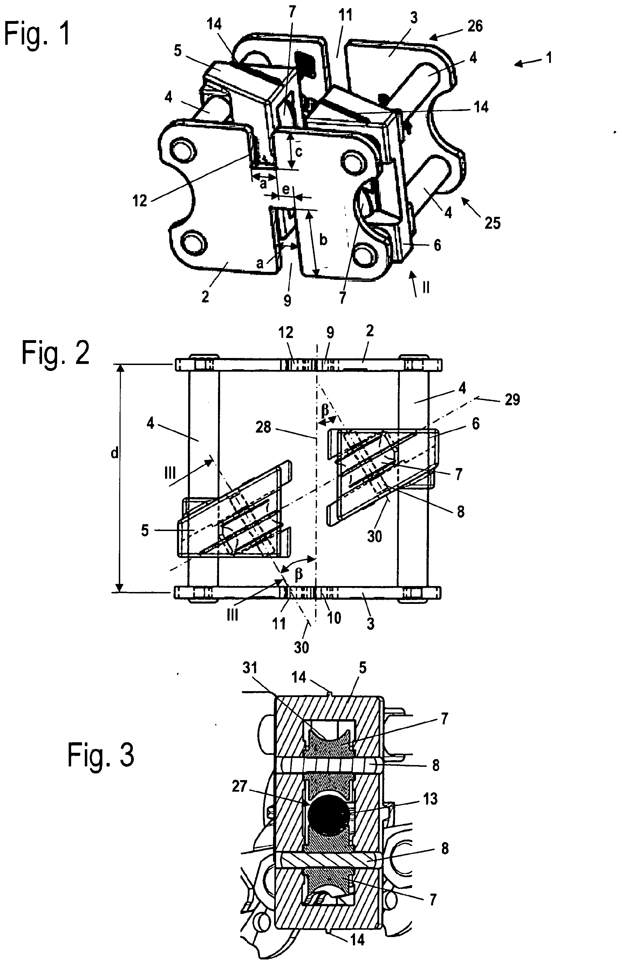

Fig. 1 zeigt eine Feilenführung 1 in perspektivischer Darstellung. Die Feilenführung 1 kann auf eine Sägekette 15 aufgesetzt werden und dient zum Führen einer Rundfeile beim Nachschärfen der Schneidzähne der Sägekette 15. Die Feilenführung 1 besitzt eine erste Seitenwand 2 und eine zweite Seitenwand 3. Die beiden Seitenwände 2, 3 sind identisch zueinander ausgebildet und um 180° zueinander gedreht an der Feilenführung 1 angeordnet. Die beiden Seitenwände 2, 3 sind über vier Führungsbolzen 4 miteinander verbunden. An jeweils zwei übereinander liegenden Führungsbolzen 4 ist ein Halter 5, 6 beweglich gelagert. Die beiden Halter 5, 6 sind zwischen den beiden Seitenwänden 2, 3 auf den Führungsbolzen 4 frei verschiebbar. Jeder Halter 5, 6 besitzt eine Markierung 14, zu welcher die Feile beim Feilvorgang ausgerichtet werden kann.

Die Feilenführung 1 besitzt eine erste Seite 25, die in Fig. 1 die Unterseite bildet und eine zweite, gegenüberliegende Seite 26, die bei der Anordnung in Fig. 1 die Oberseite bildet. Die erste Seitenwand 2 besitzt zwei Nuten 9, 12. Die Nut 9 öffnet zur ersten Seite 25 hin. Die Nut 9 besitzt eine Breite a und eine Tiefe b. Die Nut 12 öffnet auf die gegenüberliegende, zweite Seite 26. Die Nut 12 besitzt eine Breite a und eine Tiefe c, die deutlich kleiner als die Tiefe b ist. In Fig. 1 ist außerdem die in der zweiten Seitenwand 3 ausgebildete, auf die zweite Seite 26 öffnende Nut 11 gezeigt. Die zur ersten Seite 25 öffnende Nut 10 in der zweiten Seitenwand 3 ist in Fig. 2 gestrichelt angedeutet.

Wie die Fig. 1 bis 3 zeigen, besitzt jeder Halter 5, 6 zwei Führungsrollen 7, die zwischen den Seiten 25 und 26 der Feilenführung 1 übereinanderliegend angeordnet sind. Die Führungsrollen 7 sind drehbar gelagert. Die Drehachse 30 der Führungsrollen 7 liegt senkrecht zur Markierung 14 und zur in Draufsicht mit dieser zusammenfallenden Längsachse 29 einer Aufnahme 27 für die Feile 13. Die Drehachse 30 ist zu der in Fig. 2 schematisch eingezeichneten Längsrichtung 28 einer Sägekette 15, auf der die Feilenführung 1 angeordnet werden kann, um einen Neigungswinkel β geneigt. Der Neigungswinkel β beträgt vorteilhaft etwa 15° bis etwa 45° und insbesondere etwa 30°.

Wie Fig. 3 zeigt, sind die beiden Führungsrollen 7 mit Lagerstiften 8 im Halter 5 gelagert. Der Halter 6 ist identisch ausgebildet. Die Markierungen 14 sind als Erhebungen an den Haltern 5, 6 ausgebildet. Wie insbesondere Fig. 3 zeigt, bildet die Außenwand der Führungsrollen 7 eine Führungsfläche 31, die konkav ausgebildet ist. Der Radius der Führungsfläche 31 entspricht vorteilhaft etwa dem Radius der Feile 13, so dass sich eine gute Führung ergibt.

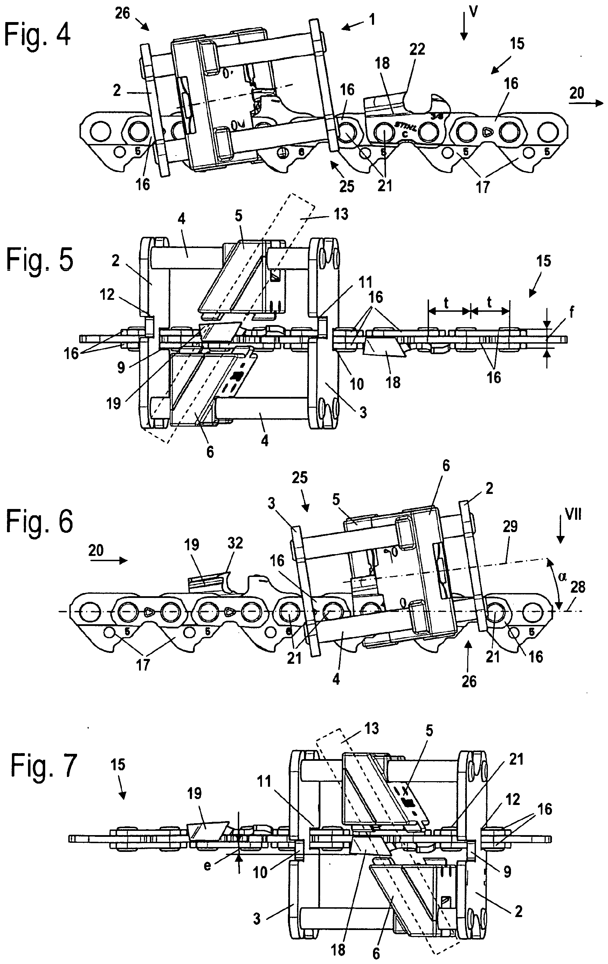

Die Fig. 4 und 5 zeigen die Feilenführung 1 in der Position zum Feilen eines Schneidzahns 22 eines linken Schneidglieds 19. In den Fig. 4 und 5 ist auch die Gestaltung einer Sägekette 15 gezeigt, auf die die Feilenführung 1 aufgesetzt ist. Die Sägekette 15 besteht aus mittigen Treibgliedern 17, die über seitliche Verbindungsglieder 16 miteinander verbunden sind. Die Verbindungsglieder 16 sind teilweise als rechte Schneidglieder 18 oder linke Schneidglieder 19 ausgebildet. Die Schneidglieder 18, 19 besitzen jeweils einen Schneidzahn 22. Die Verbindungsglieder 16 und die Treibglieder 17 sind über Niete 21 gelenkig miteinander verbunden. Die Sägekette 15 besitzt im Bereich der Verbindungsglieder 16 zwischen den Nieten 21 eine Breite f, die etwa der Breite a der Nuten 9, 10, 11, 12 der Feilenführung 1 entspricht. Die Sägekette 15 besitzt eine Teilung t, die dem mittleren Abstand zwischen den Nieten 21 entspricht. Da die Nietabstände der Verbindungsglieder 16 und der Treibglieder 17 unterschiedlich sind, ergibt sich die Teilung t als der halbe Abstand der vorlaufenden Niete 21 aufeinanderfolgender Verbindungsglieder 16.

Bei der Position der Feilenführung 1 in den Fig. 4 und 5 ist die erste Seitenwand 2 mit der Nut 9 zwischen zwei Nieten 21 der beiden dem linken Schneidglied 19 nachlaufenden Verbindungsglieder 16 aufgesetzt. Die zweite Seitenwand 3 ist mit der Nut 10 zwischen den Nieten 21 der dem linken Schneidglied 19 vorlaufenden Verbindungsglieder 16 aufgesetzt. Der in Fig. 2 gezeigte Abstand d der Nuten 9, 10, der dem Abstand der Nuten 11, 12 entspricht und der als mittlerer Abstand der Seitenwände 2, 3 gemessen ist, entspricht dem Vierfachen der Teilung t der Sägekette 15. Die Bezeichnungen "vorlaufend" und "nachlaufend" beziehen sich auf die in Fig. 4 eingezeichnete Laufrichtung 20 der Sägekette 15. Wie Fig. 5 zeigt, liegt der Halter 5 bezogen auf die Laufrichtung 20 links neben der Sägekette 15, und der Halter 6 liegt rechts neben der Sägekette 15. Die Feile 13 ist durch die Aufnahme 27 in den Haltern 5, 6 hindurchgesteckt und kann mit den Haltern 5, 6 in Längsrichtung der Führungsbolzen 4 parallel zur Schneidkante 32 des Schneidglieds 19 (Fig. 6) verschoben werden. Die Feile 13 liegt dabei an der Vorderseite des Schneidzahns 22 an.

In Fig. 6 und Fig. 7 ist die Feilenführung 1 auf die Sägekette 15 zum Feilen eines rechten Schneidglieds 18 aufgesetzt. Hierzu wurde die Feilenführung 1 über Kopf gedreht, wie im Folgenden noch näher beschrieben wird. Die zweite Seitenwand 3 ist nun bezogen auf die Laufrichtung 20 nachlaufend angeordnet und die erste Seitenwand 2 vorlaufend. Die erste Seitenwand 2 ist mit der Nut 12 auf nebeneinanderliegende zwei Verbindungsglieder 16 aufgesetzt, die vorlaufend zum Schneidglied 18 angeordnet sind. Die zweite Seitenwand 3 ist mit der Nut 11 auf zwei Verbindungsglieder 16 aufgesetzt, die nachlaufend zum Schneidglied 18 angeordnet sind. Wie Fig. 7 zeigt, ist das rechte Schneidglied 18 um einen Versatz e gegenüber dem linken Schneidglied 19 versetzt. Der Versatz e ist dabei in seitlicher Richtung zur Sägekette 15 gemessen. Wie Fig. 1 zeigt, sind die Nuten 9, 12 ebenso wie die Nuten 10, 11 um einen entsprechenden Versatz e zueinander versetzt. Dadurch liegt der Schneidzahn 22 sowohl beim Aufsetzen der Feilenführung 1 auf einem Verbindungsglied zum Feilen eines rechten Schneidglieds 18 als auch beim Aufsetzen der Feilenführung 1 auf einem Verbindungsglied zum Feilen eines linken Schneidglieds 19 immer mittig zwischen den beiden Haltern 5, 6. Aufgrund der unterschiedlichen Tiefe b, c der Nuten 9, 10 und der Nuten 11, 12 ist die Feilenführung 1 gegenüber der Längsrichtung 28 der Sägekette 15 geneigt. Wie Fig. 6 zeigt, liegt die Längsachse 29 der Aufnahme 27 für die Feile 13 gegenüber der Längsrichtung 28 der Sägekette 15 um einen Anstellwinkel α geneigt, der vorteilhaft von etwa 5° bis etwa 15° beträgt. Als besonders vorteilhaft wird ein Anstellwinkel α von etwa 10° angesehen. Der Anstellwinkel α öffnet dabei bezogen auf die Laufrichtung 20 nach vorne und fallt nach hinten ab. Die in Laufrichtung vorne liegende Seitenwand 2, 3 liegt deshalb etwas höher als die in Laufrichtung hinten liegende Seitenwand 3, 2.

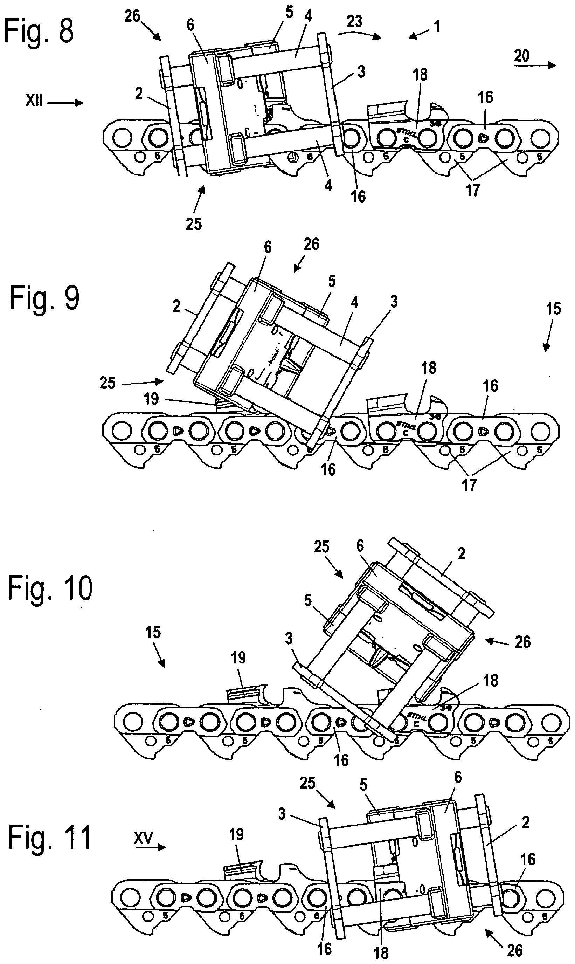

Die Fig. 8 bis 11 zeigen die Feilenführung 1 beim Umsetzen von der Position zum Feilen eines linken Schneidglieds 19 (Fig. 8) auf die Position zum Feilen eines rechten Schneidglieds 18 (Fig. 11). Um das Schneidglied aus der in Fig. 8 gezeigten Position in die in Fig. 11 gezeigte Position zu bringen, wird die Feilenführung 1 über Kopf gedreht, und zwar in Richtung des Pfeils 23 in Fig. 8. Die Feilenführung 1 führt dabei annähernd eine Abrollbewegung auf der Sägekette 15 aus. Auf den Verbindungsgliedern 16 zwischen den beiden Schneidgliedern 18, 19 wird von der Nut 10, die in Fig. 8 auf den Verbindungsgliedern 16 angeordnet ist, auf die Nut 11 gewechselt, die in Fig. 11 auf den Verbindungsgliedern 16 angeordnet ist. Die erste Seitenwand 2 schwenkt über die Feilenführung 1. In Fig. 8 ist die erste Seitenwand 2 mit der Nut 9 auf der Sägekette 15 aufgesetzt. Die Seitenwand 2 schwenkt wie in den Fig. 9, 10 gezeigt über die Feilenführung 1 und wird zum Feilen des rechten Schneidglieds 18 mit der Nut 12 auf der Sägekette 15 aufgesetzt.

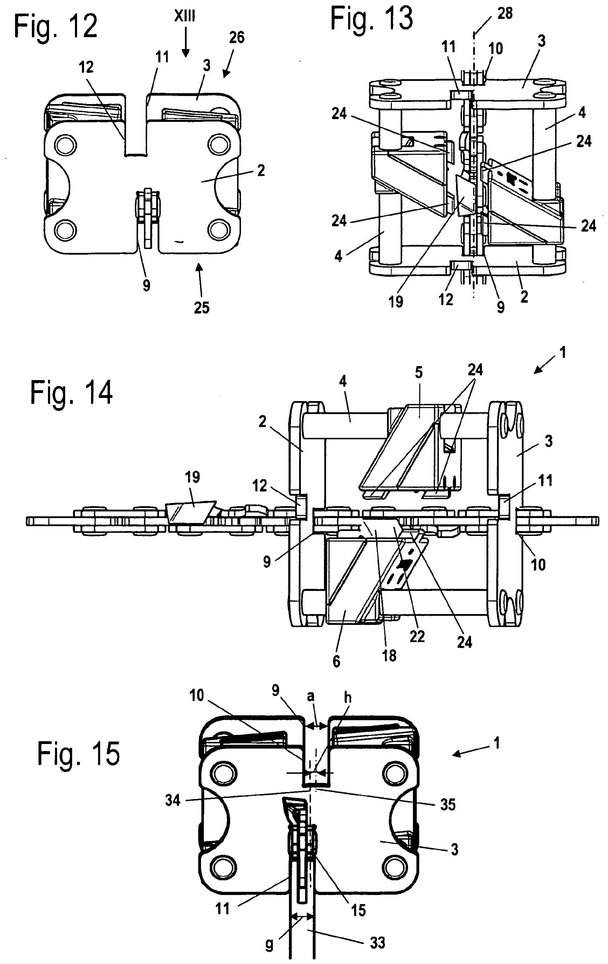

Wie Fig. 12 zeigt, sind die Nuten 9 und 10 deckungsgleich zueinander angeordnet. Auch die Nuten 11 und 12 sind deckungsgleich zueinander angeordnet. Die Führungsbolzen 4 verlaufen deshalb, wie auch in Fig. 13 gezeigt, bei auf der Sägekette 15 aufgesetzter Feilenführung 1 in Draufsicht auf die Sägekette 15 parallel zur Längsrichtung 28 der Sägekette 15.

Wie Fig. 13 zeigt, besitzen die Halter 5, 6 jeweils zwei Anschläge 24, die in Richtung auf das linke Schneidglied 19 ragen. Die Anschläge 24 liegen benachbart zum linken Schneidglied 19, jedoch mit Abstand zum Schneidglied 19. Dadurch kann die Feilenführung 1 vollständig auf die Sägekette 15 aufgesetzt werden.

Fig. 14 zeigt die Feilenführung 1 in der Position zum Feilen eines linken Schneidglieds 19. Die Feilenführung 1 ist jedoch auf ein rechtes Schneidglied 18 aufgesetzt. In dieser Position schlägt ein Anschlag 24 des Halters 6 an dem Schneidzahn 22 des Schneidglieds 18 an. Dadurch kann die Feilenführung 1 nicht vollständig aufgesetzt werden, und ein Feilen in dieser Position ist nicht möglich. Dadurch wird ein falsches Aufsetzen der Feilenführung 1 konstruktiv verhindert.

Fig. 15 zeigt die Feilenführung 1 in dem auf eine Sägekette 15 aufgesetzten Zustand, wobei die Sägekette 15 in einer Führungsschiene 33 geführt ist. Wie Fig. 15 zeigt, besitzt die Führungsschiene 33 eine Breite g, die der Breite a der Nut 11 entspricht. Dadurch kann die Feilenführung 1 fest und mit geringem Spiel auf die Führungsschiene 33 und die Sägekette 15 aufgesetzt werden. Die Feilenführung 1 umgreift dabei die Führungsschiene 33.

Wie Fig. 15 auch zeigt, besitzt die Seitenplatte 3 eine geometrische Mittellinie 34, die parallel zur Ebene der Führungsschiene 33 liegt und in der Darstellung senkrecht verläuft. Die Mitte 35 der Nut 10 ist gegenüber der Mittellinie 34 um einen Abstand h seitlich nach außen versetzt. Der Abstand a entspricht dabei dem halben Versatz e (Fig. 1). Die Mitte der Nut 11, die in Fig. 15 nicht eingezeichnet ist, ist entsprechend um einen Abstand h, der dem halben Versatz e entspricht, zur gegenüberliegenden Seite versetzt. Dadurch ergibt sich ein gesamter Versatz e zwischen den übereinander liegenden Nuten 10 und 11 und entsprechend ein Versatz bei den Nuten 9 und 12. Wie Fig. 15 auch zeigt, entspricht die Breite g der Führungsschiene 33 etwa der Breite f der Sägekette 15.

## Patentansprüche

1. Feilenführung zum Führen einer Feile (13) beim Schärfen eines Schneidglieds (18, 19) einer Sägekette (15), wobei die Sägekette (15) aus seitlichen Verbindungsgliedern (16) und mittigen, die Verbindungsglieder (16) verbindenden Treibgliedern besteht, wobei die Verbindungsglieder (16) teilweise als rechte Schneidglieder (18) oder linke Schneidglieder (19) ausgebildet sind, wobei die Feilenführung (1) zwei erste Nuten (9, 10) besitzt, mit der die Feilenführung (1) zum Feilen von linken Schneidgliedern (19) auf die Sägekette (15) aufsetzbar ist und wobei die Feilenführung (1) zwei zweite Nuten (11, 12) besitzt, mit der die Feilenführung (1) zum Feilen von rechten Schneidgliedern (18) auf die Sägekette (15) aufsetzbar ist, und wobei die Feilenführung (1) eine Aufnahme (27) für die Feile (13) besitzt, und wobei die Feilenführung (1) eine erste Seitenwand (2) und eine zweite Seitenwand (3) besitzt, und wobei die erste Seitenwand (2) eine erste Nut (9) und eine zweite Nut (12) besitzt, **dadurch gekennzeichnet, dass** die ersten Nuten (9, 10) zu einer ersten Seite (25) der Feilenführung (1) hin offen sind und dass die zweiten Nuten (11, 12) zu einer zweiten, gegenüberliegenden Seite (26) der Feilenführung (1) hin offen sind, dass die Nuttiefe (b, c) von zwei auf einer Seite (25, 26) der Feilenführung (1) angeordneten Nuten (9, 10, 11, 12) unterschiedlich ist, wobei die in Laufrichtung (20) der Sägekette (15) hinten anzuordnende Nut (9, 11) tiefer als die in Laufrichtung (20) vorne anzuordnende Nut (10, 12) ist.

2. Feilenführung nach Anspruch 1,
**dadurch gekennzeichnet, dass** auf der ersten Seite (25) und auf der zweiten Seite (26) der Feilenführung (1) jeweils zwei Nuten (9, 10, 11, 12) vorgesehen sind, wobei jeweils eine Nut (10, 12) auf die beiden dem zu feilenden Schneidglied (18, 19) vorlaufenden Verbindungsglieder (16) und eine Nut (9, 11) auf die beiden dem zu feilenden Schneidglied (18, 19) nachlaufenden Verbindungsglieder (16) der Sägekette (15) aufsetzbar ist.

3. Feilenführung nach Anspruch 2,
**dadurch gekennzeichnet, dass** der Abstand (d), von zwei auf einer Seite (25, 26) der Feilenführung (1) angeordneten Nuten (9, 10, 11, 12) der vierfachen Teilung (t) der Sägekette (15) entspricht.

4. Feilenführung nach einem der Ansprüche 1 bis **3**,
**dadurch gekennzeichnet, dass** die Längsachse (29) der Aufnahme (27) für die Feile (13) in auf die Sägekette (15) aufgesetztem Zustand der Feilenführung (1) in Seitenansicht auf die Sägekette (15) gesehen gegenüber der Längsrichtung (28) der Sägekette (15) um einen Anstellwinkel (a) von etwa 5° bis etwa 15° geneigt ist.

5. Feilenführung nach einem der Ansprüche 1 bis **4**,
**dadurch gekennzeichnet, dass** die Verbindungsglieder (16) und die Treibglieder (17) der Sägekette (15) über Niete (21) gelenkig miteinander verbunden sind und dass die Breite (a) der Nuten (9, 10, 11, 12) etwa der Breite (f) der Sägekette (15) im Bereich zwischen den Nieten (21) der Verbindungsglieder (16) entspricht.

6. Feilenführung nach einem der Ansprüche 1 bis **5**,
**dadurch gekennzeichnet, dass** die Schneidzähne (22) der rechten Schneidglieder (18) und die Schneidzähne (22) der linken Schneidglieder (19) in Längsrichtung (28) der Sägekette (15) gesehen seitlich um einen Versatz (e) zueinander versetzt sind und dass die auf den gegenüberliegenden Seiten (25, 26) der Feilenführung (1) angeordneten Nuten (9, 10, 11, 12) um diesen Versatz (e) zueinander versetzt sind.

7. Feilenführung nach einem der Ansprüche 1 bis **6**,
**dadurch gekennzeichnet, dass** die Feilenführung (1) mindestens einen Anschlag (24) besitzt, der beim falschen Aufsetzen der Feilenführung (1) an einem Schneidzahn (22) anschlägt und ein vollständiges Aufsetzen der Feilenführung (1) auf die Sägekette (15) verhindert.

8. Feilenführung nach einem der Ansprüche 1 bis **7**,
**dadurch gekennzeichnet, dass** die Aufnahme (27) für die Feile (13) an zwei auf gegenüberliegenden Seiten der Sägekette (15) anzuordnenden Haltern (5, 6) ausgebildet ist.

9. Feilenführung nach Anspruch **8**,
**dadurch gekennzeichnet, dass** die Halter (5, 6) an mindestens einem Führungsbolzen (4) etwa in Längsrichtung (28) der Sägekette (15) beweglich geführt sind.

10. Feilen**führung** nach Anspruch **8** oder **9**,
**dadurch gekennzeichnet, dass** jeder Halter (5, 6) mindestens eine Führungsrolle (7) besitzt, an der die Feile (13) geführt ist.

11. Feilenführung nach Anspruch **10**,
**dadurch gekennzeichnet, dass** jeder Halter (5, 6) zwei Führungsrollen (7) besitzt, zwischen denen die Feile (13) geführt ist.

12. Feilen**führung** nach **Anspruch 10** oder **11**,
**dadurch gekennzeichnet, dass** die Führungsrollen (7) um eine Drehachse (30) drehbar gelagert sind, die in Draufsicht auf die Sägekette (15) gesehen gegenüber der Längsrichtung (28) der Sägekette (15) geneigt ist, wobei der Neigungswinkel (β) der Drehachse (30) insbesondere etwa 15° bis etwa 45° beträgt.

13. Feilen**führung** nach einem der Ansprüche **8** bis **12**,
**dadurch gekennzeichnet, dass** beide Halter (5, 6) identisch ausgebildet und um 180° gedreht zueinander an der Feilenführung (1) angeordnet sind.

14. Feilenführung nach einem der Ansprüche **8** bis **13,**
**dadurch gekennzeichnet, dass** die Feilenführung (1) zwei Seitenwände (2, 3) besitzt, zwischen denen die Halter (5, 6) angeordnet sind und die die Nuten (9, 10, 11, 12) zum Aufsetzen der Feilenführung (1) auf die Sägekette (15) aufweisen.

## Claims

1. File guide for guiding a file (13) when grinding a cutting link (18, 19) of a saw chain (15), wherein the saw chain (15) consists of lateral connecting links (16) and central driving links connecting the connecting links (16), wherein the connecting links (16) are partially designed as right-hand cutting links (18) or left-hand cutting links (19), wherein the file guide (1) has two first grooves (9, 10), with which the file guide (1) can be placed on the saw chain (15) for filing left-hand cutting links (19), and wherein the file guide (1) has two second grooves (11, 12), with which the file guide (1) can be placed on the saw chain (15) for filing right-hand cutting links (18), and wherein the file guide (1) has a receptacle (27) for the file (13), and wherein the file guide (1) has a first side wall (2) and a second side wall (3), and wherein the first side wall (2) has a first groove (9) and a second groove (12),
**characterised in that** the first grooves (9, 10) are open towards a first side (25) of the file guide (1) and the second grooves (11, 12) are open towards a second, opposite side (26) of the file guide (1), and **in that** the groove depth (b, c) of two grooves (9, 10, 11, 12) located on one side (25, 26) of the file guide (1) are different, the groove (9, 11) to be located at the rear in the running direction (20) of the saw chain (15) being deeper than the groove (10, 12) to be located at the front in the running direction (20).

2. File guide according to claim 1,
**characterised in that** two grooves (9, 10, 11, 12) each are provided on the first side (25) and on the second side (26) of the file guide (1), wherein in each case one groove (10, 12) can be placed on the two connecting links (16) which run in front of the cutting link (18, 19) to be filed and one groove (9, 11) can be placed on the two connecting links (16) of the saw chain (15) which run behind the cutting link (18, 19) to be filed.

3. File guide according to claim 2,
**characterised in that** the spacing (d) of two grooves (9, 10, 11, 12) located on one side (25, 26) of the file guide (1) corresponds to four times the pitch (t) of the saw chain (15).

4. File guide according to any of claims 1 to 3,
**characterised in that** the longitudinal axis (29) of the receptacle (27) for the file (13), if the file guide (1) is mounted on the saw chain (15), is inclined relative to the longitudinal direction (28) of the saw chain (15) by an angle of incidence (α) of approximately 5° to 15° in a side view on the saw chain (15).

5. File guide according to any of claims 1 to 4,
**characterised in that** the connecting links (16) and the driving links (17) of the saw chain (15) are pin-connected via rivets (21), and **in that** the width (a) of the grooves (9, 10, 11, 12) approximately corresponds to the width (f) of the saw chain (15) in the region between the rivets (21) of the connecting links (16).

6. File guide according to any of claims 1 to 5,
**characterised in that** the cutting teeth (22) of the right-hand cutting links (18) and the cutting teeth (22) of the of the left-hand cutting links (19) are laterally offset by an offset (e) as viewed in the longitudinal direction (28) of the saw chain (15), and **in that** the grooves (9, 10, 11, 12) located on the opposite sides (25, 26) of the file guide (1) are offset relative to one another by this offset (e).

7. File guide according to any of claims 1 to 6,
**characterised in that** the file guide (1) has at least one stop (24), which hits a cutting tooth (22) if the file guide (1) is placed wrongly and prevents a complete positioning of the file guide (1) on the saw chain (15).

8. File guide according to any of claims 1 to 7,
**characterised in that** the receptacle (27) for the file (13) is formed on two holders (5, 6) which are to be located on opposite sides of the saw chain (15).

9. File guide according to claim 8,
**characterised in that** the holders (5, 6) are movably guided on at least one guide pin (4) approximately in the longitudinal direction (28) of the saw chain (15).

10. File guide according to claim 8 or 9,
**characterised in that** each holder (5, 6) has at least one guide roller (7), on which the file (13) is guided.

11. File guide according to claim 10,
**characterised in that** each holder (5, 6) has two guide rollers (7), between which the file (13) is guided.

12. File guide according to claim 10 or 11,
**characterised in that** the guide rollers (7) are mounted for rotation about an axis of rotation (30), which is inclined relative to the longitudinal direction (28) of the saw chain (15) in a top view on the saw chain (15), the angle of inclination (β) of the axis of rotation (30) being approximately 15° to 45° in particular.

13. File guide according to any of claims 8 to 12,
**characterised in that** both holders (5, 6) are designed identically and located on the file guide (1) with an 180° rotation relative to each other.

14. File guide according to any of claims 8 to 13,
**characterised in that** the file guide (1) has two side walls (2, 3), between which the holder (5, 6) is located and which comprise the grooves (9, 10, 11, 12) for placing the file guide (1) on the saw chain (15).

## Revendications

1. Guidage de lime pour guider une lime (13) lors de l'affûtage d'un élément de coupe (18, 19) d'une scie à chaîne (15), la scie à chaîne (15) se composant d'éléments de liaison latéraux (16) et d'éléments d'entraînement centraux qui relient les éléments de liaison (16), les éléments de liaison (16) étant conçus en partie comme des éléments de coupe droits (18) ou comme des éléments de coupe gauches (19), le guidage de lime (1) présentant deux premières rainures (9, 10) avec lesquelles il peut être posé sur la scie à chaîne (15) afin de limer des éléments de coupe gauches (19), et le guidage de lime (1) présentant deux secondes rainures (11, 12) avec lesquelles il peut être posé sur la scie à chaîne (15) afin de limiter des éléments de coupe droits (18), et le guidage de lime (1) présentant un logement (27) pour la lime (13), et le guidage de lime (1) présentant une première paroi latérale (2) et une seconde paroi latérale (3), et la première paroi latérale (2) présentant une première rainure (9) et une seconde rainure (12),
**caractérisé en ce que** les premières rainures (9, 10) sont ouvertes vers un premier côté (25) du guidage de lime (1), et **en ce que** les secondes rainures (11, 12) sont ouvertes vers un second côté (26), opposé, du guidage de lime (1), **en ce que** la profondeur de rainure (b, c) de deux rainures (9, 10, 11, 12) disposées sur un côté (25, 26) du guidage de lime (1) est différente, la rainure (9, 11) disposée derrière, dans le sens de marche (20) de la scie à chaîne (15), étant plus profonde que la rainure (10, 12) à disposer devant, dans le sens de marche (20).

2. Guidage de lime selon la revendication 1,
**caractérisé en ce que** sur le premier côté (25) et sur le second côté (26) du guidage de lime (1) sont prévues deux rainures respectives (9, 10, 11, 12), une rainure (10, 12) étant apte à être posée sur les deux éléments de liaison (16) de la scie à chaîne (15) qui sont situés en avant de l'élément de coupe à limer (18, 19), tandis qu'une rainure (9, 11) est apte à être posée sur les deux éléments de liaison (16) qui sont situés en arrière de l'élément de coupe à limer (18, 19).

3. Guidage de lime selon la revendication 2,
**caractérisé en ce que** l'écartement (d) de deux rainures (9, 10, 11, 12) disposées sur un côté (25, 26) du guidage de lime (1) correspond à quatre fois le pas (t) de la scie à chaîne (15).

4. Guidage de lime selon l'une des revendications 1 à 3,
**caractérisé en ce que** lorsque le guidage de lime (1) est posé sur la scie à chaîne (15), l'axe longitudinal (29) du logement (27) pour la lime (13), sur une vue latérale de ladite scie (15), est incliné par rapport au sens longitudinal (28) de la scie à chaîne (15) suivant un angle d'attaque (α) d'environ 5° à environ 15°.

5. Guidage de lime selon l'une des revendications 1 à 4,
**caractérisé en ce que** les éléments de liaison (16) et les éléments d'entraînement (17) sont reliés entre eux de manière articulée par des rivets (21), et **en ce que** la largeur (a) des rainures (9, 10, 11, 12) correspond à peu près à la largeur (f) de la scie à chaîne (15) dans la zone située entre les rivets (21) des éléments de liaison (16).

6. Guidage de lime selon l'une des revendications 1 à 5,
**caractérisé en ce que** les dents de coupe (22) des éléments de coupe droits (18) et les dents de coupe (22) des éléments de coupe gauches (19), vues dans le sens longitudinal (28) de la scie à chaîne (15), présentent latéralement un décalage (e), et **en ce que** les rainures (9, 10, 11, 12) disposées sur les côtés opposés (25, 26) du guidage de lime (1) présentent l'une par rapport l'autre ce décalage (e).

7. Guidage de lime selon l'une des revendications 1 à 6,
**caractérisé en ce que** le guidage de lime (1) présente au moins une butée (24) qui, si le guidage de lame (1) est mal posé, bute contre une dent de coupe (22) et empêche une pose complète du guidage de lime (1) sur la scie à chaîne (15).

8. Guidage de lime selon l'une des revendications 1 à 7,
**caractérisé en ce que** le logement (27) pour la lime (13) est formé sur deux supports (5, 6) à disposer sur les côtés opposés de la scie à chaîne (15).

9. Guidage de lime selon la revendication 8,
**caractérisé en ce que** les supports (5, 6) sont guidés mobiles à peu près dans le sens longitudinal (28) de la scie à chaîne (15) sur au moins un axe de guidage (4).

10. Guidage de lime selon la revendication 8 ou 9,
**caractérisé en ce que** chaque support (5, 6) a au moins un galet de guidage (7) sur lequel la lime (13) est guidée.

11. Guidage de lime selon la revendication 10,
**caractérisé en ce que** chaque support (5, 6) a deux galets de guidage (7) entre lesquels la lime (13) est guidée.

12. Guidage de lime selon la revendication 10 ou 11,
**caractérisé en ce que** les galets de guidage (7) sont montés en rotation sur un axe de rotation (30) qui, sur une vue de dessus de la scie à chaîne (15), est incliné par rapport au sens longitudinal (28) de la scie à chaîne (15), l'angle d'inclinaison (β) de l'axe de rotation (30) étant en particulier d'environ 15° à environ 45°.

13. Guidage de lime selon l'une des revendications 8 à 12,
**caractérisé en ce que** les deux supports (5, 6) sont identiques et sont disposés sur le guidage de lime (1) en étant tournés de 180° l'un par rapport à l'autre.

14. Guidage de lime selon l'une des revendications 8 à 13,
**caractérisé en ce que** le guidage de lime (1) a deux parois latérales (2, 3) entre lesquelles sont disposés les supports (5, 6) et qui présentent les rainures (9, 10, 11, 12) pour poser le guidage de lime (1) sur la scie à chaîne (1).
